# EUROPEAN PATENT SPECIFICATION

(11) **EP 4 419 806 B1**
(45) Date of publication and mention of the grant of the patent: **09.12.2026**
(21) Application number: 22802001.2
(22) Date of filing: 12.10.2022
(51) Int. Cl.: F16C 37/00, F16C 32/04

(54) **ROTARY MACHINE COMPRISING A MAGNETIC THRUST BEARING WITH PUMPING EFFECT**
ROTIERENDE MASCHINE MIT EINEM MAGNETISCHEN AXIALLAGER MIT PUMPENEFFEKT
MACHINE ROTATIVE COMPRENANT UNE BUTEE AXIALE MAGNETISCH AVEC EFFET DE POMPE

(30) Priority: 19.10.2021 IT 202100026729
(43) Date of publication of application: 28.08.2024
(73) Proprietor: Nuovo Pignone S.r.l., 50100 Firenze (FI) (IT)
(72) Inventor: ORTIZ NERI, Massimiliano, Florence, Firenze 50127 (IT); CANGIOLI, Francesco, Florence, Firenze 50127 (IT); BILIOTTI, Davide, Florence, Firenze 50127 (IT); FIORAVANTI, Duccio, Florence, Firenze 50127 (IT)
(74) Representative: Novagraaf Group
(86) International application number: PCT/EP2022/025470
(87) International publication number: WO 2023/066517

(56) References cited:
- EP-A1- 2 808 572
- FR-A1- 3 022 963
- JP-A- H0 571 533
- US-A- 3 377 113
- US-A- 4 935 654
- US-A- 6 132 094

## Description

### TECHNICAL FIELD

The subject-matter disclosed herein relates to a magnetic thrust bearing cooled by a cooling fluid.

### BACKGROUND ART

Magnetic bearings are largely used for controlling the position of a rotor of a machine on which the magnetic bearing is installed due to several advantages including very low and predictable friction and the ability to run without lubrication and in vacuum. Typically, magnetic bearings are used in industrial machines such as compressors, turbines, pumps, motors and generators.

In particular, magnetic bearings can be Active Magnetic Bearing (=AMB) or Passive Magnetic Bearing (=PMB). A passive magnetic bearing uses permanent magnets to generate magnetic levitation; however, passive magnetic bearings are difficult to design. As a result, most magnetic bearings currently used in machines are active magnetic bearings.

In general, an active magnetic bearing is an electro-magnetic system which has a stator with several electro-magnets positioned around a rotor, which is typically coupled to a shaft; the electro-magnets of the stator generate attracting forces on the rotor in order to maintain the position of the rotor relative to the stator.

Currently, on rotary machines equipped with magnetic bearing, a cooling system is also provided in order to dissipate heat in the magnetic bearing, the cooling system including an external blower or additional impeller installed on the shaft of the rotary machine to circulate the cooling fluid. For example, EP3450701 and WO2017050445 disclose a turbomachine system that includes a cooling circuit coupled to active magnetic bearings which circulates a cooling fluid to remove heat therefrom. In EP3450701 the cooling fluid is recirculated by an additional impeller mounted on the machine shaft while in WO2017050445 the cooling fluid is circulated by an external blower. JP H05 71533 A discloses a thrust bearing. US 4 935 654 A discloses an axial magnet bearing.

Therefore, the rotary machine equipped with a magnetic bearing has to be provided with at least a dedicated component to allow the cooling flow circulation or recirculation.

### SUMMARY

It would be desirable to have a cooled magnetic bearing which avoid the use of a dedicated component for the cooling flow circulation or recirculation, in order to reduce the number of the so-called "auxiliaries", i.e. auxiliary devoices, of the machine (and therefore to reduce electric energy to be supplied to the "auxiliaries") and in order to increase the machine availability.

The present invention is defined in the accompanying claims. According to an aspect, the subject-matter disclosed herein relates to a rotary machine comprising a cooled magnetic thrust bearing having a rotor assembly comprising a thrust disk which is arranged to rotate around an axis and to receive a cooling fluid. The thrust disk comprises a plurality of blades that is configured to pump the fluid as a result of rotation of the rotor assembly in order to allow cooling fluid circulation, in particular cooling fluid recirculation in a closed loop configuration.

According to the invention, the subject-matter disclosed herein relates to a rotary machine provided with a cooled magnetic thrust bearing wherein the rotor assembly of the cooled magnetic thrust bearing is coupled with a shaft of the rotary machine.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 shows a schematic and simplified cross-sectional view of an embodiment of a rotary machine, in particular an expander-compressor system, with an embodiment of an innovative magnetic thrust bearing;
Fig. 2 shows a more detailed view of a partial cross-section of a magnetic thrust bearing coupled with the rotary machine of Fig. 1;
Figs. 3 show partially a front simplified view and a cross-section simplified view of a first embodiment (not totally covered by the annexed claims) of an innovative magnetic thrust bearing having a thrust disk with a plurality of grooves;
Figs. 4 show partially a front simplified view and a cross-section simplified view of a second embodiment of an innovative magnetic thrust bearing having a thrust disk with a plurality of blades;
Fig. 5 shows a simplified sectional view of an example of joint which can be used to couple the plurality of blades to the thrust disk of the second embodiment of the innovative magnetic thrust bearing of Figs. 4; and
Fig. 6 shows a simplified partial top view of a third embodiment of an innovative magnetic thrust bearing having a thrust disk with a plurality of grooves and with a plurality of blades.

### DETAILED DESCRIPTION OF EMBODIMENTS

The subject-matter disclosed herein relates to an innovative magnetic thrust bearing which is able due to its internal design to pump a cooling fluid without the need for an external blower or an additional impeller. In other words, the magnetic thrust bearing performs both its traditional thrust balancing function and its innovative cooling fluid pumping function.

According to the invention, the subject-matter disclosed herein relates to a rotating machine, in particular to a compressor or an expander-compression system. The rotating machine has a new magnetic thrust bearing in which the rotor assembly is integral with the shaft of the rotary machine. The shaft of the rotating machine is configured to rotate and the cooling fluid of the magnetic thrust bearing is pumped as a result of the rotation of the rotor assembly.

Reference now will be made in detail to embodiments of the disclosure, an example of which is illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. In the following description, similar reference numerals are used for the illustration of figures of the embodiments to indicate elements performing the same or similar functions. Moreover, for clarity of illustration, some references may be not repeated in all the figures.

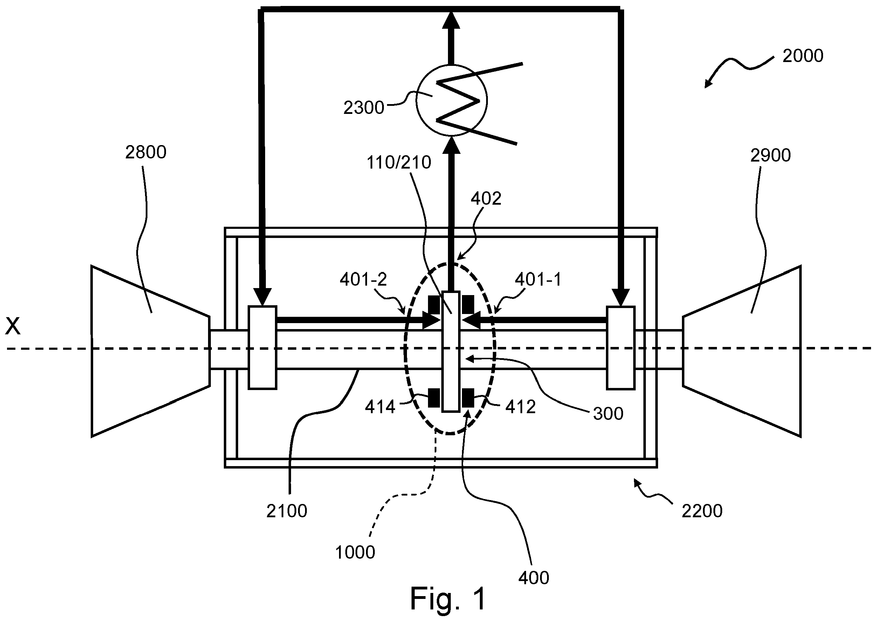

According to a first aspect, the subject-matter disclosed herein relates to a rotary machine 2000 equipped with an innovative magnetic thrust bearing 1000; a simplified cross-sectional view of an embodiment of the machine is shown in Fig. 1. Advantageously, the rotary machine 2000 is an expander-compression system comprising an expander 2800, a compressor 2900 and a shaft 2100 mechanically coupling the expander 2800 and the compressor 2900. As it is apparent from Fig. 1, the compressor 2900 is arranged at a first end of the shaft 2100 and the expander 2900 is arranged at a second end of the shaft. In other embodiments, the rotary machine 2000 may be for example a compressor having a shaft which couples the compressor to a motor, in particular an electric motor.

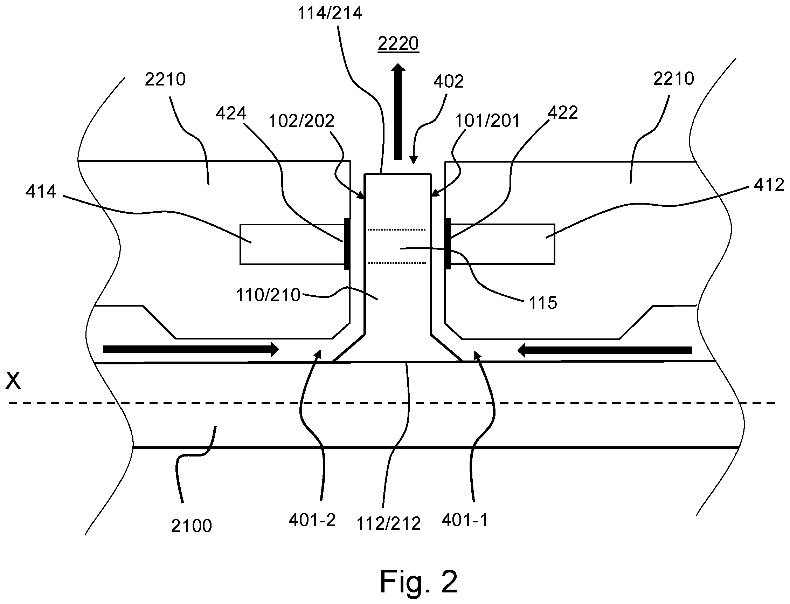

Fig. 1 schematically shows the magnetic thrust bearing 1000 including a rotor assembly 300 and a stator assembly 400. As shown in the figure, all these elements may be housed in a casing 2200 of the rotary machine 2000. The rotor assembly 300 (including a thrust disk 110/210 that will be described later) is configured to rotate around an axis X; in particular, the rotor assembly 300 may be integral with the shaft 2100 of the rotary machine 2000 or may be coupled, in particular welded, to the shaft 2100 of the rotary machine 2000; more advantageously, the axis X of the rotor assembly 300 is also the axis of the shaft 2100 of the rotary machine 2000. In other words, the rotor assembly 300 is configured to rotate (including the thrust disk) together with the rotor of the rotary machine for example as it may be part of the rotor of the rotary machine 2000, in particular of the shaft 2100. For example, Fig. 2 shows a partial cross-sectional view of the rotor magnetic thrust bearing 1000 which is coupled with the shaft 2100.

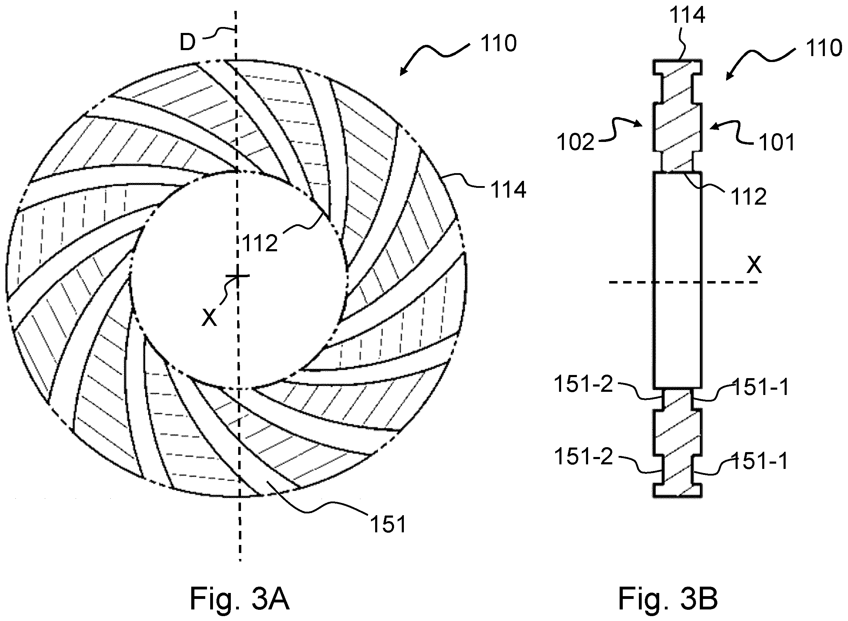

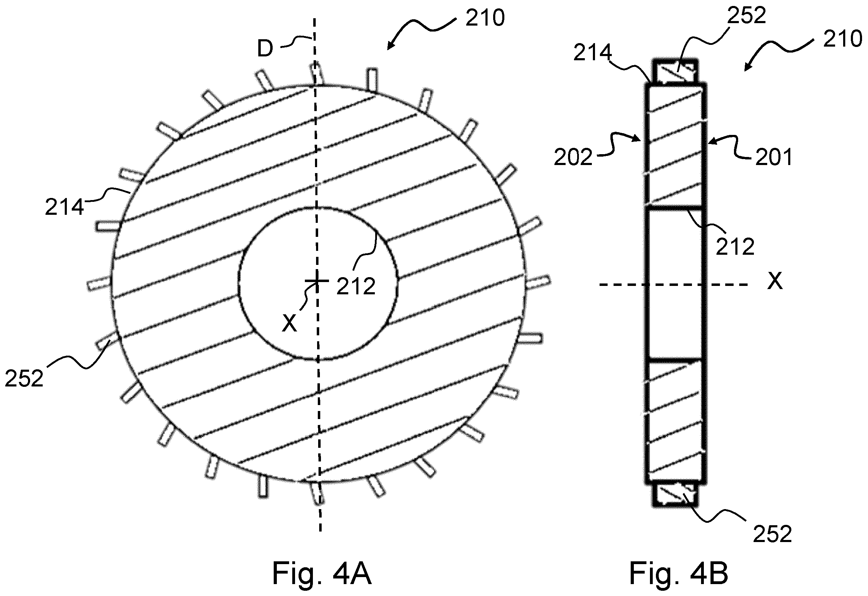

With non-limiting reference to Fig. 1 and Fig. 2 as well as Fig. 3 and Fig. 4, the rotor assembly 300 comprises a thrust disk 110/210 (110 in Fig. 3 and 210 in Fig. 4) configured to rotate around the axis X, in particular to rotate together with the shaft 2100 of the rotary machine 2000. The thrust disk 110/210 has a first side 101/201 and a second side 102/202; in particular, the first side 101/201 faces the first end of the shaft 2100 and the second side 102/202 faces the second end of the shaft 2100, in such a way that the thrust disk 110/210 is arranged at an intermediate portion with respect to the two ends of the shaft 2100, preferably in the middle of a shaft length.

Typically, the thrust disk 110/210 has an inner periphery 112/212 and an outer periphery 114/214; advantageously, the inner periphery 112/212 is arranged to be coupled with the shaft 2100 of the rotary machine 2000. It is to be noted that the thickness of the thrust disk 110/210 may vary between the inner periphery 112/212 and the outer periphery 114/214; for example, the thickness of the thrust disk 110/210 may be greater at the inner periphery 112/212 than the thickness of the thrust disk 110/210 at the outer periphery 114/214. According to an advantageous embodiment that is similar to the one in Fig. 2, the thrust disk 110/210 may have:
- a first portion, which starts at the inner periphery 112/212 of the disk, which is coupled to the shaft 2100, and which has a greatest thickness at the inner periphery 112/212; preferably, the thickness of the first portion is gradually reduced from the greatest thickness to a first reduced thickness;
- a second portion, which has constant thickness; preferably, the constant thickness of the second portion is equal to the first reduced thickness of the first portion;
- a third portion 115/215 (that will be referred in the following also as "intermediate region"), in which the thickness starts from the constant thickness of the second portion and is gradually reduced; in other words, the thickness of the third portion is gradually reduced from the constant thickness of the second portion to a second reduced thickness; and
- a fourth portion, which starts at the outer periphery 114/214 of the disk and which has constant thickness; preferably, the constant thickness of the fourth portion is equal to the second reduced thickness of the third portion.

According to the embodiment of Fig. 1 and Fig. 2, the stator assembly 400 comprises at least two magnet assemblies 412 and 414, a first magnet assembly 412 facing the first side 101/201 of the thrust disk 110/210 and a second magnet assembly 414 facing the second side 102/202 of the thrust disk 110/210; preferably, the magnet assemblies 412 and 414 are ring-shaped; more preferably, the magnet assemblies 412, 414 are arranged around the axis X.

With non-limiting reference to Fig. 2, the stator assembly 400 is fixed to wall that may be an inner wall 2210 of the casing 2200 of the rotary machine 2000. In particular, the stator assembly 400 may be embedded in the wall such that a side of the magnet assemblies 412 and 414 faces the thrust disk 110/210. Advantageously, there is a gap between the rotor assembly 300 and the stator assembly 400. More advantageously, the side of magnet assemblies 412 and 414 which faces the thrust disk 110/210 has a protective plate 422 and 424, in particular made of bakelite, to protect the magnet assemblies 412 and 414 for example from wear and/or corrosion and/or heat.

Considering Fig. 1 and Fig. 2, the magnetic thrust bearing 1000 has at least a fluid inlet and a fluid outlet and is configured to be cooled by a fluid, in particular a gas. At least the first side 101/201 of the thrust disk 110/210, preferably both the first side 101/201 and the second side 102/202 of the thrust disk 110/210, is configured to receive the fluid. Preferably, the magnetic thrust bearing 1000 has a first fluid inlet 401-1 for the fluid entering at the first side 101/201 of the thrust disk 110/210 and a second fluid inlet 401-2 for the fluid entering at the second side 102/202 of the thrust disk 110/210 (see the two horizontal arrows in Fig. 2). Preferably, the fluid outlet 402 is at the outer periphery 114/214 of the thrust disk 110/210. (see e.g. the vertical arrow in Fig. 2).

The magnetic thrust bearing 1000 is configured to be cooled by the fluid which enters into the fluid inlets 401-1 and 401-2, flows from the fluid inlets 401-1 and 401-2 to the fluid outlet 402, and exits from the fluid outlet 402, in particular at a higher temperature with respect to the fluid temperature at the fluid inlets 401-1 and 401-2; advantageously, the fluid may be a working fluid of the rotating machine (i.e. process gas). It is to be noted that if the process gas composition contains contaminants, like H2S, CO2, etc., the so-called "instrument air", which is typically easily procurable and available in industrial plants (for example for pneumatic equipment or valve actuation), may be used.

Advantageously, the fluid enters the casing 2200 of the rotary machine 2000, preferably through at least an inlet flange, flows substantially in axial direction (i.e. parallel to the axis X as shown for example in Fig. 1 and Fig. 2), preferably in a gap between the shaft 2100 and an inner wall of the casing 2200 of the rotary machine 2000 and enters the magnetic thrust bearing 1000 through the fluid inlets 401-1 and 401-2, at the inner periphery 112/212 of the thrust disk 110/210, substantially in axial direction (see Fig. 1 and even better in Fig. 2). After being cooled by the fluid, the magnetic thrust bearing 1000 is configured to discharge the fluid through the fluid outlet 402, at the outer periphery 114/214 of the thrust disk 110/210, substantially in radial direction (i.e. perpendicular to the axis X as shown for example in Fig. 1 and Fig. 2). Advantageously, the fluid outlet 402 of the magnetic thrust bearing 1000 is fluidly coupled with an inner chamber 2220 of the casing 2200; then the fluid exits the casing 2200, in particular the inner chamber 2220, preferably through an outlet flange. According to the invention, the fluid is arranged to flow in a closed-loop configuration, in particular comprising a cooling system coupled with the inlet flange and the outlet flange, and to be recirculated in the closed-loop configuration only by means of the magnetic thrust bearing 1000 thanks to its pumping effect, as it will be apparent from the following. With non-limiting reference to Fig. 1, the closed-loop configuration is arranged at least partially outside the casing 2200. Advantageously, the cooling system also comprises a heat exchanger 2300 configured to remove heat from the fluid being discharged from the fluid outlet 402.

In Fig. 3A, Fig. 3B, Fig. 4A and Fig. 4B are schematically shown two embodiments of the thrust disk 110 (in Fig. 3) and 210 (in Fig. 4) of the innovative magnetic thrust bearing 1000 according to the present disclosure.

Figures 3A and 3B partially show, for example and without limitation, a first embodiment (not totally covered by the annexed claims) of a thrust disk 110 comprising a plurality of grooves configured to pump the fluid. Fig. 1A is a frontal schematic view of the thrust disk 110 and Fig. 1B is a cross-section schematic view of the thrust disk 110 of Fig. 1A taken along the dotted line. Figures 4A and 4B partially show, for example and without limitation, a second embodiment of a thrust disk 210 comprising a plurality of blades configured to pump the fluid. Fig. 4A is a frontal schematic view of the thrust disk 210 and Fig. 4B is a cross-section schematic view of the thrust disk 210 of Fig. 4A taken along the dotted line D.

According to the first embodiment, at least the first side 101 of the thrust disk 110 comprises a plurality of grooves 151 configured to pump the fluid as a result of the rotation of the rotor assembly 300 of the thrust magnetic bearing 1000. In a preferred embodiment (see Fig. 3B), the thrust disk 110 comprises a plurality of grooves 151-1 on the first side 101 and a plurality of grooves 151-2 on the second side 102, the grooves 151-1 and 151-2 being configured to pump the fluid as a result of rotation of the rotor assembly 300 of the thrust magnetic bearing 1000.

Advantageously, as shown in Fig. 3A and Fig. 3B, the grooves 151 extend from an area around the inner periphery 112 of the thrust disk 110 to an area around the outer periphery 114 of the thrust disk 110; in particular the grooves 151 extend continuously from an area around the inner periphery 112 of the thrust disk 110 to an area around the outer periphery 114 of the thrust disk 110. Alternatively, for example if the thrust disk 110 is made as the one shown in Fig. 2, the grooves 151 may extend from an area around the inner periphery 112 of the thrust disk 110 to an area around an intermediate region 115 of the thrust disk 110; in particular, the grooves 151 extend in a first constant thickness portion of the thrust disk 110. Alternatively or additionally, the grooves 151 may extend from an area around an intermediate region 115 of the thrust disk 110 to an area around the outer periphery 114 of the thrust disk 110; in particular, the grooves 151 extend in a second constant thickness portion of the thrust disk 110. It is to be noted that grooves 151 may be only on the first side 101 or on the second side 102 of the thrust disk 110 or alternatively grooves 151 may be on both the first and the second side of the thrust disk 110 (see for example the embodiment of Fig. 3B.

Advantageously, grooves 151 are curved-shaped; more advantageously, the grooves 151 are configured to define a preferential direction which may be followed by the fluid. It is to be noted that the width and/or the depth of the grooves 151 may not be constant: for example, the width at the area around the inner periphery 112 may be greater than the width at the area around the outer periphery 114. Advantageously, if the thrust disk 110 has grooves 151 both on the first side 101 and second side 102, the geometry of the grooves 151 is preferably the same both on the first side 101 and on the second side 102 of the thrust disk 110.

Advantageously, the fluid that enters the magnetic thrust bearing 1000 in order to cool it down flows on the thrust disk 110 from the area around the inner periphery 112 to the area around the outer periphery 114. More advantageously, most part of the fluid that flows on the thrust disk 110 is configured to flow in the preferential direction defined by the grooves 151; in other words, the fluid is guided to flow along the grooves 151 so that, with the rotation of the rotor assembly 300 due to the rotation of the shaft 2100, the grooves 151 are configured to pump the fluid. It is to be noted that the fluid that flows along the grooves 151 is subjected to the pumping effect of the thrust disk 110; generally, the fluid that flows outside the grooves 151 is not subjected to the pumping effect of the thrust disk 110.

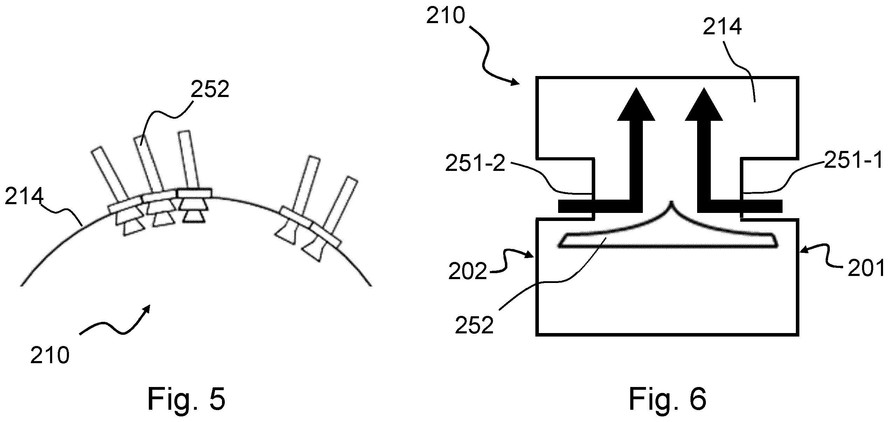

According to the second embodiment shown in Figs. 4, the thrust disk 210 comprises a plurality of blades 252 at the outer periphery 214 configured to pump the fluid as a result of the rotation of the rotor assembly 300 of the thrust magnetic bearing 1000. The blades 252 may be obtained directly from the thrust disk 210, by machining of the disk, or may be mounted on the thrust disk 210 by welding or joining. It is to be noted that if blades 252 are mounted on the thrust disk 210, they can be made of different material from the one of the thrust disk 210; for example, blades 252 may be made of composite materials. It is also to be noted that, if blades 252 are added by joining, known joint can be used. Preferably, according for example to Fig. 5, the blades 252 are mounted on the thrust disk 210 by dovetail coupling; in particular, in Fig. 5 are shown two possible couplings: a first group of blades have fir tree coupling and a second group of blades have dovetail coupling.

Advantageously, the blades 252 are smaller than the thrust disk 210; in particular, a height of the blades 252 might be in the range 5-15% of the diameter of the thrust disk 210 (measured at the outer periphery 214). Advantageously, a width of the blades 252 is less than or equal to the thickness of the thrust disk 210; preferably, the width of the blades 252 might be in the range 70-100% of the thickness of the thrust disk 210 (see for example Fig. 6).

In another embodiment, shown in Fig. 6, the thrust disk 210 has both a plurality of grooves 251 and a plurality of blades 252. In particular, with non-limiting reference to Fig. 6, the thrust disk 210 has a plurality of grooves 251 on both side 201 and 202 of the thrust disk 210 and a plurality of blades 252 at its outer periphery 214. In particular, Fig. 6 is a simplified partial top view of the thrust disk 210 in which can be seen a first groove 251-1 on the first side 201 of the thrust disk 210 and a second groove 251-2 on the second side of the thrust disk 210; advantageously, the first groove 251-1 and the second groove 251-2 ends at the outer periphery 214 of the thrust disk 210. It is to be noted that the blade 252 may have a blade profile with two concavities, in particular with two edges with curved shape, for example to make the pumping effect on the fluid more effective and/or to help collect fluid at the thrust disk outer periphery 214; in particular, the blade 252 may have a first concavity oriented toward the first side 201 and a second concavity oriented towards the second side 202; preferably, the first and the second concavities of the blade 252 form a central ridge of the blade profile. Alternatively, the blade 252 may have two oblique edges with flat shape (i.e. without concavity), a first edge oriented toward the first side 201 and a second edge oriented towards the second side 202; ; preferably, the first and the second edges form a central ridge of the blade profile. According to Fig. 6, the fluid exits from the first and the second grooves 251-1 and 251-2 and flows on the blade 252 which pumps the fluid and exits the blade following the profile of the blade 252 (see the two big arrows in Fig. 6). It is to be noted that, with non-limiting reference to Fig. 6, the blade 252 is located at the outer periphery 214 of the thrust disk 210 where the ends of the first groove 251-1 and the second groove 251-2 end; advantageously, at least some of the plurality of blades 252 are located at the ends of at least some of the plurality of the grooves 251. It is also to be noted that the thrust disk 210 of Fig. 6 is rotating in the same direction of the exit direction of the fluid from the blade 252.

It is to be noted that the cross-section of the blade shown in Fig. 6 (or similar one with a first concavity oriented toward a first side and a second concavity oriented toward a second side) may advantageously be used in a thrust disk even not in combination with grooves in its surface or surfaces.

## Claims

1. A rotary machine (2000) comprising a magnetic thrust bearing (1000) comprising:
- a rotor assembly (300) configured to rotate, wherein the rotor assembly comprises a thrust disk (110, 210) having a first side (101, 201) and a second side (102, 202),
- a stator assembly (400), wherein the stator assembly comprises a magnet assembly (412, 414) acting on the thrust disk (110, 210),
wherein the magnetic thrust bearing (1000) is configured to be cooled by a fluid,
wherein at least the first side (101, 201) of the thrust disk (110, 210) is configured to receive the fluid substantially in an axial direction and an outer periphery (114, 214) of the thrust disk (110, 210) is configured to discharge the fluid substantially in a radial direction,
wherein the thrust disk (110, 210) comprises a plurality of blades (252) at said outer periphery (114, 214),
wherein the plurality of blades (252) is configured to pump the fluid as a result of rotation of the rotor assembly (300); and
wherein the rotor assembly (300) of the magnetic thrust bearing (1000) is coupled with a shaft of the rotary machine (2000);
**characterized by** the rotary machine (2000) comprising a cooling system wherein a fluid is recirculated in a closed loop configuration only by means of the magnetic thrust bearing (1000).

2. The rotary machine (2000) of claim 1, wherein the thrust disk (110, 210) comprises further a plurality of grooves (151, 251) at said first side (101, 201), wherein the plurality of grooves (151, 251) is configured to pump the fluid as a result of rotation of the rotor assembly (300).

3. The rotary machine (2000) of claim 2,
wherein the stator assembly comprises preferably at least two magnet assemblies (412, 414), a first magnet assembly (412) facing the first side (101, 201), a second magnet assembly (414) facing the second side (102, 202);
wherein the magnetic thrust bearing (1000) has at least one fluid inlet (401-1, 401-2) and a fluid outlet (402), and is configured to be cooled by the fluid entering into the at least one fluid inlet (401-1, 401-2), flowing from the fluid inlet (401-1, 401-2) to the fluid outlet (402), and exiting from the fluid outlet (402);
wherein at least the first side of the thrust disk (110, 210) is configured to receive the fluid at an inner periphery (112, 212) of the thrust disk (110, 210), and discharge the fluid at the outer periphery (114, 214) of the thrust disk (110, 210).

4. The rotary machine (2000) of claim 3,
wherein the magnetic thrust bearing (1000) has a first fluid inlet (401-1) for the fluid at the first side (101, 201) of the thrust disk (110, 210) and a second fluid inlet (401-2) for the fluid at the second side (102, 202) of the thrust disk (110, 210), and
wherein the thrust disk (110, 210) comprises a first plurality of grooves (151-1) on the first side (101, 201) and a second plurality of grooves (151-2) on the second side (102, 202),
wherein the first plurality of grooves (151-1) and the second plurality of grooves (151-2) are configured to pump the fluid as a result of rotation of the rotor assembly (300).

5. The rotary machine (2000) of claim 2, wherein the grooves extend:
- from an area around an inner periphery (112, 212) of the thrust disk (110, 210) to an area around the outer periphery (114, 214) of the thrust disk (110, 210), or
- from an area around an inner periphery (112, 212) of the thrust disk (110, 210) to an area around an intermediate region (115, 215) of the thrust disk (110, 210), or
- from an area around an intermediate region (115, 215) of the thrust disk (110, 210) to an area around the outer periphery (114, 214) of the thrust disk (110, 210).

6. The rotary machine (2000) of claim 2, wherein the thrust disk (110, 210) comprises a first plurality of grooves and a second plurality of grooves on a first side (101, 201) of the thrust disk (110, 210) and/or on a second side (102, 202) of the thrust disk (110, 210), the first plurality being at an inner area of the side (101, 102) and the second plurality being at an outer area of the side (101, 102).

7. The rotary machine (2000) of claim 2, wherein the grooves (151, 251) are curved-shaped.

8. The rotary machine (2000) of claim 2, wherein the grooves (151, 251) are configured so that at least part of the fluid flows in a preferential direction defined by the grooves (151, 251).

9. The rotary machine (2000) of claim 1, wherein the blades (252) are smaller than the thrust disk (210), in particular a height of the blades (252) is 5-15% of a diameter of the thrust disk (210).

10. The ma rotary machine (2000) of claim 1, wherein a width of the blades (252) is 70-100% of a thickness of the thrust disk (210).

11. The rotary machine (2000) of claim 1, wherein the blades (252) have a blade profile with a first concavity and a second concavity, the first concavity being oriented toward a first side (201) of the thrust disk (210) and the second concavity being oriented toward a second side (202) of the thrust disk (210).

12. The rotary machine (2000) of claim 1, wherein the blades (252) are mounted on the thrust disk (210), in particular by dovetail coupling.

13. The rotary machine (2000) of claim 1, wherein the rotary machine (2000) is an expander-compressor system.

14. The rotary machine (2000) of claim 13, wherein the rotor assembly (300) of the magnetic thrust bearing (1000) is mounted to a shaft (2100) mechanically coupling an expander (2800) of the expander-compressor system and a compressor (2900) of the expander-compressor system.

15. The rotary machine (2000) of claim 1, wherein the magnetic thrust bearing (1000) is positioned inside a casing (2200) of the machine and the fluid outlet (402) of the magnetic thrust bearing (1000) is fluidly coupled with an inner chamber (2220) of the casing (2200).

## Patentansprüche

1. Rotationsmaschine (2000), umfassend ein magnetisches Drucklager (1000), umfassend:
- eine Rotoranordnung (300), die konfiguriert ist, um zu rotieren, wobei die Rotoranordnung eine Druckscheibe (110, 210) umfasst, die eine erste Seite (101, 201) und eine zweite Seite (102, 202) aufweist,
- eine Statoranordnung (400), wobei die Statoranordnung eine Magnetanordnung (412, 414) umfasst, die auf die Druckscheibe (110, 210) einwirkt,
wobei das magnetische Drucklager (1000) konfiguriert ist, um durch ein Fluid gekühlt zu werden,
wobei mindestens die erste Seite (101, 201) der Druckscheibe (110, 210) konfiguriert ist, um das Fluid im Wesentlichen in einer axialen Richtung aufzunehmen, und ein Außenumfang (114, 214) der Druckscheibe (110, 210) konfiguriert ist, um das Fluid im Wesentlichen in einer radialen Richtung abzugeben,
wobei die Druckscheibe (110, 210) eine Vielzahl von Schaufeln (252) an dem Außenumfang (114, 214) umfasst,
wobei die Vielzahl von Schaufeln (252) konfiguriert ist, um das Fluid als Ergebnis einer Rotation der Rotoranordnung (300) zu pumpen; und
wobei die Rotoranordnung (300) des magnetischen Drucklagers (1000) mit einer Welle der Rotationsmaschine (2000) gekoppelt ist;
**dadurch gekennzeichnet, dass** die Rotationsmaschine (2000) ein Kühlsystem umfasst, wobei ein Fluid in einer geschlossenen Schleifenkonfiguration nur mittels des magnetischen Drucklagers (1000) rezirkuliert wird.

2. Rotationsmaschine (2000) nach Anspruch 1, wobei die Druckscheibe (110, 210) ferner eine Vielzahl von Nuten (151, 251) an der ersten Seite (101, 201) umfasst, wobei die Vielzahl von Nuten (151, 251) konfiguriert ist, um das Fluid als Ergebnis der Rotation der Rotoranordnung (300) zu pumpen.

3. Rotationsmaschine (2000) nach Anspruch 2,
wobei die Statoranordnung vorzugsweise mindestens zwei Magnetanordnungen (412, 414) umfasst, eine erste Magnetanordnung (412), die der ersten Seite (101, 201) zugewandt ist, eine zweite Magnetanordnung (414), die der zweiten Seite (102, 202) zugewandt ist;
wobei das magnetische Drucklager (1000) mindestens einen Fluideinlass (401-1, 401-2) und einen Fluidauslass (402) aufweist und konfiguriert ist, um durch das Fluid gekühlt zu werden, das in den mindestens einen Fluideinlass (401-1, 401-2) eintritt, von dem Fluideinlass (401-1, 401-2) zu dem Fluidauslass (402) strömt und aus dem Fluidauslass (402) austritt;
wobei mindestens die erste Seite der Druckscheibe (110, 210) konfiguriert ist, um das Fluid an einem Innenumfang (112, 212) der Druckscheibe (110, 210) aufzunehmen und das Fluid an dem Außenumfang (114, 214) der Druckscheibe (110, 210) abzugeben.

4. Rotationsmaschine (2000) nach Anspruch 3,
wobei das magnetische Drucklager (1000) einen ersten Fluideinlass (401-1) für das Fluid an der ersten Seite (101, 201) der Druckscheibe (110, 210) und einen zweiten Fluideinlass (401-2) für das Fluid an der zweiten Seite (102, 202) der Druckscheibe (110, 210) aufweist und
wobei die Druckscheibe (110, 210) eine erste Vielzahl von Nuten (151-1) auf der ersten Seite (101, 201) und eine zweite Vielzahl von Nuten (151-2) auf der zweiten Seite (102, 202) umfasst,
wobei die erste Vielzahl von Nuten (151-1) und die zweite Vielzahl von Nuten (151-2) konfiguriert sind, um das Fluid als Ergebnis der Rotation der Rotoranordnung (300) zu pumpen.

5. Rotationsmaschine (2000) nach Anspruch 2, wobei sich die Nuten erstrecken:
- von einem Bereich um einen Innenumfang (112, 212) der Druckscheibe (110, 210) herum zu einem Bereich um den Außenumfang (114, 214) der Druckscheibe (110, 210) herum oder
- von einem Bereich um einen Innenumfang (112, 212) der Druckscheibe (110, 210) herum zu einem Bereich um eine Zwischenregion (115, 215) der Druckscheibe (110, 210) herum oder
- von einem Bereich um eine Zwischenregion (115, 215) der Druckscheibe (110, 210) herum zu einem Bereich um den Außenumfang (114, 214) der Druckscheibe (110, 210) herum.

6. Rotationsmaschine (2000) nach Anspruch 2, wobei die Druckscheibe (110, 210) eine erste Vielzahl von Nuten und eine zweite Vielzahl von Nuten auf einer ersten Seite (101, 201) der Druckscheibe (110, 210) und/oder auf einer zweiten Seite (102, 202) der Druckscheibe (110, 210) umfasst, wobei sich die erste Vielzahl an einem Innenbereich der Seite (101, 102) befindet und sich die zweite Vielzahl an einem Außenbereich der Seite (101, 102) befindet.

7. Rotationsmaschine (2000) nach Anspruch 2, wobei die Nuten (151, 251) gekrümmt geformt sind.

8. Rotationsmaschine (2000) nach Anspruch 2, wobei die Nuten (151, 251) konfiguriert sind, sodass mindestens ein Teil des Fluids in einer Vorzugsrichtung strömt, die durch die Nuten (151, 251) definiert ist.

9. Rotationsmaschine (2000) nach Anspruch 1, wobei die Schaufeln (252) kleiner als die Druckscheibe (210) sind, insbesondere wobei eine Höhe der Schaufeln (252) 5-15 % eines Durchmessers der Druckscheibe (210) beträgt.

10. Rotationsmaschine (2000) nach Anspruch 1, wobei eine Breite der Schaufeln (252) 70-100 % einer Dicke der Druckscheibe (210) beträgt.

11. Rotationsmaschine (2000) nach Anspruch 1, wobei die Schaufeln (252) ein Schaufelprofil mit einer ersten Konkavität und einer zweiten Konkavität aufweisen, wobei die erste Konkavität zu einer ersten Seite (201) der Druckscheibe (210) hin ausgerichtet ist und die zweite Konkavität zu einer zweiten Seite (202) der Druckscheibe (210) hin ausgerichtet ist.

12. Rotationsmaschine (2000) nach Anspruch 1, wobei die Schaufeln (252) an der Druckscheibe (210) montiert sind, insbesondere durch eine Schwalbenschwanzverbindung.

13. Rotationsmaschine (2000) nach Anspruch 1, wobei die Rotationsmaschine (2000) ein Expander-Kompressor-System ist.

14. Rotationsmaschine (2000) nach Anspruch 13, wobei die Rotoranordnung (300) des magnetischen Drucklagers (1000) an einer Welle (2100) montiert ist, die einen Expander (2800) des Expander-Kompressor-Systems und einen Kompressor (2900) des Expander-Kompressor-Systems mechanisch koppelt.

15. Rotationsmaschine (2000) nach Anspruch 1, wobei das magnetische Drucklager (1000) innerhalb einer Verrohrung (2200) der Maschine positioniert ist und der Fluidauslass (402) des magnetischen Drucklagers (1000) mit einer Innenkammer (2220) der Verrohrung (2200) fluidisch gekoppelt ist.

## Revendications

1. Machine rotative (2000) comprenant un palier de butée magnétique (1000) comprenant :
- un ensemble rotor (300) conçu pour tourner, dans laquelle l'ensemble rotor comprend un disque de butée (110, 210) ayant un premier côté (101, 201) et un second côté (102, 202),
- un ensemble stator (400), dans laquelle l'ensemble stator comprend un ensemble aimant (412, 414) agissant sur le disque de butée (110, 210),
dans laquelle le palier de butée magnétique (1000) est conçu pour être refroidi par un fluide,
dans laquelle au moins le premier côté (101, 201) du disque de butée (110, 210) est conçu pour recevoir le fluide sensiblement dans une direction axiale et une périphérie externe (114, 214) du disque de butée (110, 210) est conçue pour évacuer le fluide sensiblement dans une direction radiale,
dans laquelle le disque de butée (110, 210) comprend une pluralité d'aubes (252) au niveau de ladite périphérie externe (114, 214),
dans laquelle la pluralité d'aubes (252) est conçue pour pomper le fluide du fait de la rotation de l'ensemble rotor (300) ; et
dans laquelle l'ensemble rotor (300) du palier de butée magnétique (1000) est accouplé à un arbre de la machine rotative (2000) ;
**caractérisée par** la machine rotative (2000) comprenant un système de refroidissement dans lequel un fluide circule dans une configuration en boucle fermée uniquement au moyen du palier de butée magnétique (1000).

2. Machine rotative (2000) selon la revendication 1, dans laquelle le disque de butée (110, 210) comprend en outre une pluralité de rainures (151, 251) au niveau dudit premier côté (101, 201), dans laquelle la pluralité de rainures (151, 251) est conçue pour pomper le fluide du fait de la rotation de l'ensemble rotor (300).

3. Machine rotative (2000) selon la revendication 2,
dans laquelle l'ensemble stator comprend de préférence au moins deux ensembles aimant (412, 414), un premier ensemble aimant (412) faisant face au premier côté (101, 201), un second ensemble aimant (414) faisant face au second côté (102, 202) ;
dans laquelle le palier de butée magnétique (1000) possède au moins une entrée de fluide (401-1, 401-2) et une sortie de fluide (402), et est conçu pour être refroidi par le fluide entrant dans l'au moins une entrée de fluide (401-1, 401-2), s'écoulant de l'entrée de fluide (401-1, 401-2) vers la sortie de fluide (402), et sortant par la sortie de fluide (402) ;
dans laquelle au moins le premier côté du disque de butée (110, 210) est conçu pour recevoir le fluide au niveau d'une périphérie interne (112, 212) du disque de butée (110, 210), et évacuer le fluide au niveau de la périphérie externe (114, 214) du disque de butée (110, 210).

4. Machine rotative (2000) selon la revendication 3,
dans laquelle le palier de butée magnétique (1000) possède une première entrée de fluide (401-1) pour le fluide sur le premier côté (101, 201) du disque de butée (110, 210) et une seconde entrée de fluide (401-2) pour le fluide sur le second côté (102, 202) du disque de butée (110, 210), et
dans laquelle le disque de butée (110, 210) comprend une première pluralité de rainures (151-1) sur le premier côté (101, 201) et une seconde pluralité de rainures (151-2) sur le second côté (102, 202),
dans laquelle la première pluralité de rainures (151-1) et la seconde pluralité de rainures (151-2) sont conçues pour pomper le fluide du fait de la rotation de l'ensemble rotor (300).

5. Machine rotative (2000) selon la revendication 2, dans laquelle les rainures s'étendent :
- d'une zone autour d'une périphérie interne (112, 212) du disque de butée (110, 210) à une zone autour de la périphérie externe (114, 214) du disque de butée (110, 210), ou
- d'une zone autour d'une périphérie interne (112, 212) du disque de butée (110, 210) à une zone autour d'une région intermédiaire (115, 215) du disque de butée (110, 210), ou
- d'une zone autour d'une région intermédiaire (115, 215) du disque de butée (110, 210) à une zone autour de la périphérie externe (114, 214) du disque de butée (110, 210).

6. Machine rotative (2000) selon la revendication 2, dans laquelle le disque de butée (110, 210) comprend une première pluralité de rainures et une seconde pluralité de rainures sur un premier côté (101, 201) du disque de butée (110, 210) et/ou sur un second côté (102, 202) du disque de butée (110, 210), la première pluralité étant au niveau d'une zone interne du côté (101, 102) et la seconde pluralité étant au niveau d'une zone externe du côté (101, 102).

7. Machine rotative (2000) selon la revendication 2, dans laquelle les rainures (151, 251) sont en forme de courbe.

8. Machine rotative (2000) selon la revendication 2, dans laquelle les rainures (151, 251) sont conçues de sorte qu'au moins une partie du fluide s'écoule dans une direction préférentielle définie par les rainures (151, 251).

9. Machine rotative (2000) selon la revendication 1, dans laquelle les aubes (252) sont plus petites que le disque de butée (210), en particulier une hauteur des aubes (252) représente 5 à 15 % d'un diamètre du disque de butée (210).

10. Machine rotative ma (2000) selon la revendication 1, dans laquelle une largeur des aubes (252) représente 70 à 100 % d'une épaisseur du disque de butée (210).

11. Machine rotative (2000) selon la revendication 1, dans laquelle les aubes (252) possèdent un profil d'aube présentant une première concavité et une seconde concavité, la première concavité étant orientée vers un premier côté (201) du disque de butée (210) et la seconde concavité étant orientée vers un second côté (202) du disque de butée (210).

12. Machine rotative (2000) selon la revendication 1, dans laquelle les aubes (252) sont montées sur le disque de butée (210), en particulier par un accouplement à queue d'aronde.

13. Machine rotative (2000) selon la revendication 1, dans laquelle la machine rotative (2000) est un système détendeur-compresseur.

14. Machine rotative (2000) selon la revendication 13, dans laquelle l'ensemble rotor (300) du palier de butée magnétique (1000) est monté sur un arbre (2 100) accouplant mécaniquement un détendeur (2800) du système détendeur-compresseur et un compresseur (2900) du système détendeur-compresseur.

15. Machine rotative (2000) selon la revendication 1, dans laquelle le palier de butée magnétique (1000) est positionné à l'intérieur d'un carter (2200) de la machine et la sortie de fluide (402) du palier de butée magnétique (1000) est accouplée fluidiquement avec une chambre interne (2220) du carter (2200).
